# EUROPEAN PATENT SPECIFICATION

(11) **EP 2 878 982 B1**
(45) Date of publication and mention of the grant of the patent: **10.04.2019**
(21) Application number: 13823879.5
(22) Date of filing: 26.07.2013
(51) Int. Cl.: G02B 6/42

(54) **INTEGRATED OPTICAL MODULE**
INTEGRIERTES OPTISCHES MODUL
MODULE OPTIQUE INTÉGRÉ

(30) Priority: 26.07.2012 JP 2012166086
(43) Date of publication of application: 03.06.2015
(73) Proprietor: Nippon Telegraph and Telephone Corporation, Tokyo 100-8116 (JP); NTT Electronics Corporation, Yokohama-shi Kanagawa 221-0031 (JP)
(72) Inventor: KASAHARA, Ryoichi, Musashino-shi Tokyo 180-8585 (JP); ARATAKE, Atsushi, Musashino-shi Tokyo 180-8585 (JP); OGAWA, Ikuo, Musashino-shi Tokyo 180-8585 (JP); NASU, Yusuke, Musashino-shi Tokyo 180-8585 (JP); SUZUKI, Yuichi, Yokohama-shi Kanagawa 221-0031 (JP); SOMA, Shunichi, Yokohama-shi Kanagawa 221-0031 (JP)
(74) Representative: TBK
(86) International application number: PCT/JP2013/004569
(87) International publication number: WO 2014/017109

(56) References cited:
- EP-A1- 0 636 909
- JP-A- 2003 255 196
- JP-A- 2006 243 391
- JP-A- 2008 134 662
- JP-A- 2008 164 828
- JP-A- 2011 248 048
- US-A- 5 907 649
- US-A1- 2010 296 776

## Description

### Technical Field

The present invention relates to an integrated optical module, and relates to an integrated optical module mounted with a planar light circuit which is integrated together with a light emitting element or a light receiving element and forms an optical transmitter or receiver.

### Background Art

With the development of optical communication technology, development of optical components is becoming more and more important. Above all, an optical transmitter or receiver is increased in its transmission speed and response speed, and has a larger communication capacity. In a configuration of a typical transmitter or receiver, the transmitter or receiver includes a light emitting element or a light receiving element fabricated using optical semiconductor, and an output or input optical fiber, and they are optically coupled to each other via a lens. For example, in a case of an optical receiver, light emitted from the input optical fiber is focused on the light receiving element by the lens, and is directly detected (intensity detection).

Turning to a modulation and demodulation processing technique for an optical transmission system, signal transmission using a phase modulation method is in wide practical use. A phase shift keying (PSK) method is a method for transmitting a signal through modulation of the phase of light. The PSK method can achieve much larger transmission capacity than before by way of multi symbol modulation or the like.

In order to receive such a PSK signal, the phase of light needs to be detected. The light receiving element can detect the intensity of signal light, but cannot directly detect the phase of the light. Hence, a means for converting the phase of light into light intensity is needed. For example, there is a method for detecting phase difference by using interference of light. Information on the phase of light can be obtained by causing signal light to interfere with other light (reference light) and detecting the light intensity of interfering light. There are coherent detection and differential detection. In the coherent detection, a light source prepared separately is used as the reference light. In the differential detection, part of signal light is branched off and is used as reference light, and the signal light is caused to interfere with the reference light. As described above, unlike a conventional optical receiver using only an intensity modulation method, a recent optical receiver using the PSK method needs an optical interference circuit which converts phase information into intensity information through interference of light.

Such an optical interference circuit can be achieved using a planar light circuit (PLC). The PLC delivers superior features in terms of mass productivity, low cost, and high reliability, and can be used as various types of light interference circuit. In fact, as an optical interference circuit used in a PSK optical receiver, an optical delay interference circuit, a 90-degree hybrid circuit, and the like are offered and in practical use. Such a PLC is fabricated by a glass deposition technique such as standard photography, etching, and FHD (Flame Hydrolysis Deposition).

In a specific manufacturing process, first, an under-cladding layer made mainly of silica glass or the like and a core layer having a higher refractive index than the under-cladding layer are deposited on a substrate made of Si or the like. Thereafter, various patterns of waveguides are formed on the core layer. Lastly, the waveguides are embedded by an over-cladding layer. A PLC chip having a waveguide-type optical functional circuit is fabricated by such a process. Signal light is encapsulated in the waveguides fabricated by the above process and propagated within the PLC chip.

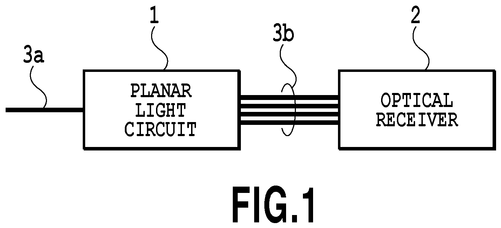

Fig. 1 shows a conventional method for optically connecting a PLC and an optical receiver. Simple fiber connection as shown in Fig. 1 is employed as a basic method for connection of a PLC and an optical receiver in a PSK optical receiver. Optical coupling is established by connecting a planar light circuit (PLC) 1, which is connected at its input end to an optical fiber 3a, and an optical receiver 2 to each other with optical fibers 3b. The number of optical fibers 3b used for the optical coupling is determined by the number of output light beams outputted from the PLC. Multiple optical fibers are used for the optical coupling in some cases. For this reason, such a configuration of an optical receiver using optical fiber connection may have too large a size. To overcome such a problem in the configuration, the optical receiver can be reduced in size by coupling the output of the PLC and the input of the optical receiver with no optical fiber interposed therebetween and by integrating all into one package. Such a form of an optical receiver in which the PLC and the optical receiver are optically coupled together directly is called an integrated optical module.

To obtain an integrated optical module, how to fix the PLC chip is particularly important. In a case of optically coupling light outputted from the PLC chip and propagated in airspace to a light receiving element by a lens or the like, if the positional relation among the end of light emission from the PLC chip, the lens, and the light receiving element changes, not all of the light can be received by the light receiving element, causing a loss. Such a loss problem is especially noticeable when ambient temperature changes to change the temperature of the package housing the optical receiver, the temperature of each element, and the like, and their positions change due to the influence of thermal expansion. To achieve optical coupling with low loss, it is necessary that the positional relation among the components does not change, at least not relative to each other, even if ambient temperature or the like changes.

In particular, the PLC chip occupies more area in the optical receiver than the light receiving element by about one to two digits, and is therefore more likely to change in shape due to the thermal expansion. Further, a substrate and a deposited thin-film glass which constitute the planar light circuit are largely different in their coefficients of thermal expansion, and therefore temperature change causes large warpage. For this reason, changes in the position and angle of light emitted from the PLC chip relative to the light receiving element are really problematic. These two changes cause the position and angle of light emitted from the planar light circuit to change, leading to displacement in the optical axis. The displacement in the optical axis deteriorates optical coupling of the PLC chip to the light receiving element, and causes a loss. In order to achieve an integrated optical module, it is important to overcome such displacement in the optical axis or to render the displacement harmless.

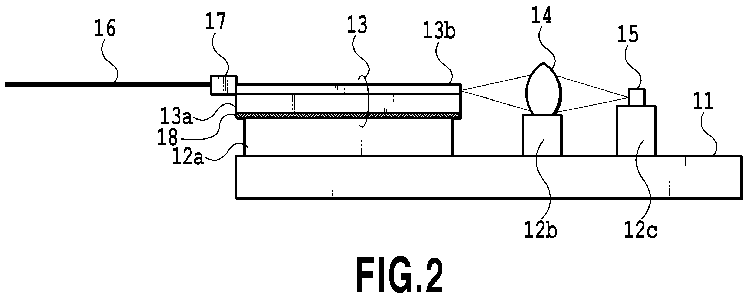

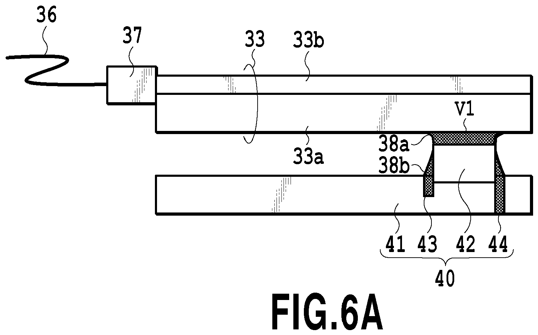

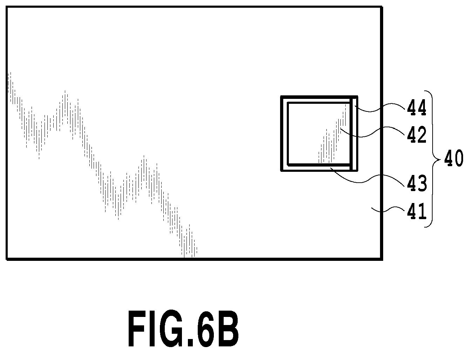

Fig. 2 shows an internal structure of a conventional integrated optical module. There is known a method for securely fixing the almost entire bottom surface of the PLC chip so that the aforementioned optical-axis displacement may not occur when temperature changes (see, for example, Fig. 6 of PTL 1). In the integrated optical module shown in Fig. 2, a PLC chip 13 in which an optical interference circuit is formed as an optical functional circuit, a lens 14, and a light receiving element 15 are fixed to a base substrate 11 with fixing mounts 12a, 12b, 12c as support members, respectively. An optical fiber 16 and the PLC chip 13 are connected to each other via an optical-fiber fixing component 17. In this integrated optical module, light inputted from the optical fiber 16 interferes in the PLC chip 13, and is then coupled to the light receiving element 15 by the lens 14.

The fixing mount 12a and the PLC chip 13 are fixed together by an adhesive 18 or solder. The almost entire bottom surface of the PLC chip 13 is securely fixed to the fixing mount, so that temperature-related expansion or warpage is suppressed. Further, the lens 14 and the light receiving element 15 are also fixed to their fixing mounts, so that the optical axis may not be displaced when temperature changes.

The configuration shown in Fig. 2 can suppress or sufficiently reduce the optical-axis displacement caused by temperature change, but makes noticeable the change in the properties of the PLC chip due to temperature change. As described earlier, the planar light circuit 13 includes a Si substrate 13a and a silica glass layer 13b which are largely different in their coefficients of thermal expansion, and are likely to suffer from great warpage or thermal expansion when temperature changes. In the configuration shown in Fig. 2, thermal expansion and warpage are suppressed because the entire bottom surface of the PLC chip 13 is fixed.

On the other hand, in this case, a large thermal stress is generated between the Si substrate 13a and the silica glass layer 13b. This stress causes change in the refractive index in the silica glass layer 13b through a photo-elastic effect. In the light interference circuit formed in the PLC chip 13, the lengths of waveguides and the refractive indices are precisely adjusted in order to control interference property. The change in the refractive index caused by the stress brings about a change in an equivalent circuit length to change the properties of an interferometer, and consequently, deteriorates the properties of the optical interference circuit.

If, in order to suppress the change in optical properties by suppressing the occurrence of thermal stress, an elastic adhesive, a soft adhesive such as paste, or a fixing paste is used as the adhesive 18 (see, for example, PTL 2), the aforementioned influence on the optical-axis displacement becomes noticeable, and this causes loss.

### Citation List

### Patent Literature

PTL1: JP 2006-243391 A
PTL 2: JP 2009-175364 A

### Summary of Invention

### Technical Problem

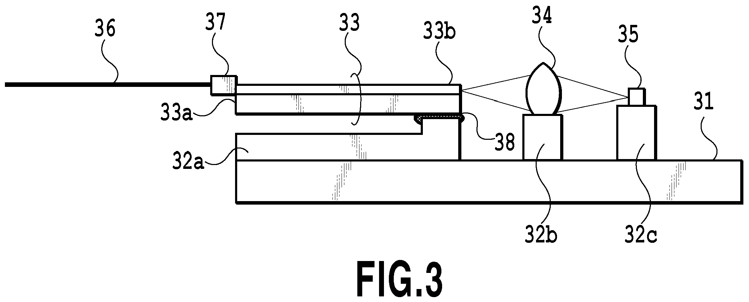

To solve the above problems, a configuration shown in Fig. 3 has been proposed to be employed in an integrated optical module in which optical components such as a PLC chip are integrated. In this configuration, an adhesive 38 is applied to a seat formed by raising part of a fixing mount 32a, and a PLC chip 33 is bonded and fixed to the base. Other configurations in Fig. 3 are similar to those in Fig. 2. Specifically, an optical fiber 36 is connected to the PLC chip 33 via an optical-fiber fixing component 37, and optical components such as the PLC chip 33, a lens 34, and a light receiving element 35 are mounted on a base substrate 31 via fixing mounts 32a, 32b, 32c. By such a configuration, even if deformation or warpage occurs in the PLC chip due to temperature change, the optical functional circuit is affected by the stress only to a minimum degree. Thus, deterioration in the properties of the optical functional circuit can be suppressed.

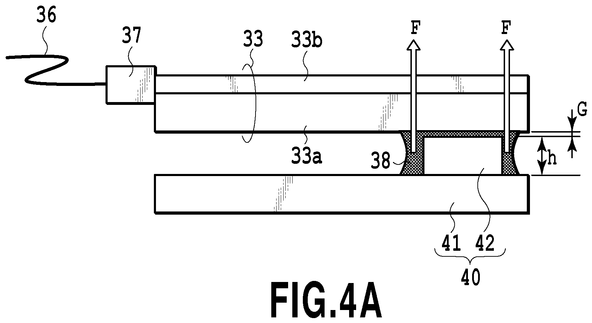

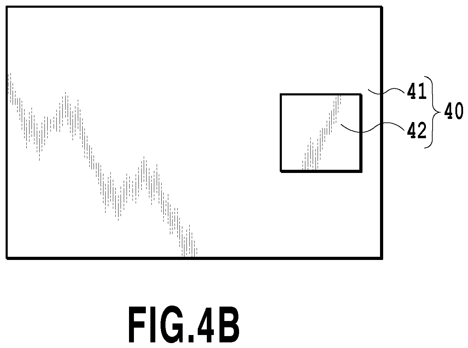

However, in this integrated optical module, as shown in Fig. 4A, if the adhesive 38 for connecting the PLC chip 33 to a seat portion 42 of a mount 40 is applied too much, the adhesive 38 overflows around the seat portion 42 and hardens. The overflowing adhesive 38 is likely to concentrate around the seat by its adhesive property, and does not spread over the mount but stays around the adhesion surface from which the adhesive 38 has overflowed. Fig. 4B is a top view of the mount. As shown in Fig. 4B, the seat 42 of square section is provided on part of the mount. Thus, the overflowing adhesive stays along the four sides of the seat. Since the adhesion surface between the seat 42 and the PLC chip 33 is very small, in order to control the amount of the adhesion precisely, the amount has to be controlled on a µl level. In addition, generally, metals do not change much in volume when humidity changes, but resins change in volume much when humidity changes (see, for example, JP 2011-248048 A, JP 2008-164828 A, and JP 2003-255196 A). When humidity changes, the adhesive 38 made of a resin swells, but the seat 42 of the mount 40 made of a metal does not change in volume. Hence, if humidity changes with the overflowing adhesive staying around the adhesion surface, the overflowing adhesive 38 swells to generate force F pushing up the PLC chip 33. This serves as a cause for positional change and separation of the PLC chip. Note that the section of the seat referred to herein is a section viewed from the upper surface of a support portion 41 of the mount 40.

In view of above, the present invention has an objective of providing an integrated optical module which can avoid positional change and separation of a PLC chip when humidity changes.

### Solution to Problem

To solve the above problem, an invention described in one embodiment provides an integrated optical module as specified in claim 1.

In the above integrated optical module, part of the groove preferably has a penetrating hole penetrating from the upper surface to a lower surface of the support portion. In the above integrated optical module, a shape of the groove preferably is symmetric around the seat.

Alternative solutions to solve the above problem are disclosed in US 2010/0296776 A1, EP 0 636 909 A1, and JP 2008-134662 A, JP2006/243391 A, and US5907649 A.

### Brief Description of Drawings

Fig. 1 is a diagram showing a conventional method of optical connection between a planar light circuit and an optical receiver;
Fig. 2 is a diagram showing an internal structure of an example of a conventional integrated optical module;
Fig. 3 is a diagram showing an internal structure of another example of a conventional integrated optical module;
Fig. 4A is a diagram illustrating positional change and separation of the PLC chip in the conventional integrated optical module;
Fig. 4B is a diagram illustrating positional change and separation of the PLC chip in the conventional integrated optical module;
Fig. 5A is a side sectional view showing an internal structure of an example of an integrated optical module of a first embodiment;
Fig. 5B is a top view showing the internal structure of the example of the integrated optical module of the first embodiment;
Fig. 6A is a side sectional view showing an internal structure of an example of an integrated optical module of a second embodiment; and
Fig. 6B is a top view showing the internal structure of the example of the integrated optical module of the second embodiment.

### Description of Embodiments

Embodiments of the present invention are described in detail below.

### (First Embodiment)

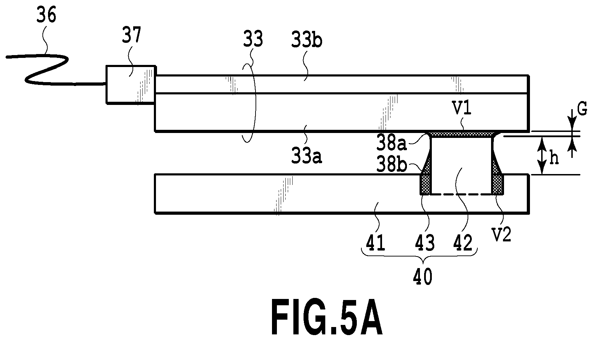

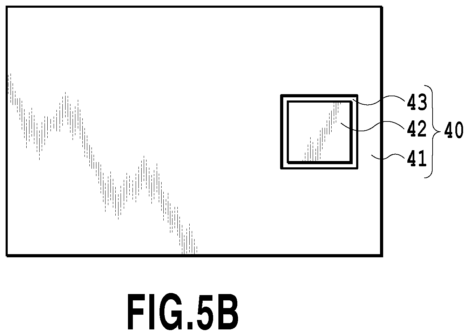

Figs. 5A and 5B are each a diagram showing a main portion of an integrated optical module of a first embodiment. Fig. 5A is a side sectional view showing a schematic configuration of the main portion of the integrated optical module of the first embodiment, and Fig. 5B is a top view of a mount used in the integrated optical module of the first embodiment. The integrated optical module is configured such that optical components, such as a PLC chip, a lens, and a light receiving element or a light emitting element, are mounted on a base substrate via mounts, and these components are sealed by a package. As shown in Fig. 5A, a PLC chip 33 on which an optical interference circuit is formed is connected to an optical fiber 36 via a fiber-fixing component 37, and is bonded and fixed to a mount 40 with an adhesive 38a.

The PLC chip 33 is formed such that a silica glass layer 33b is stacked on a Si substrate 33a. The silica glass layer 33b has formed thereon a waveguide-type optical functional circuit formed by a core and claddings . The adhesive 38 may be, for example, any of an epoxy adhesive that hardens with heat, an adhesive that hardens with moisture, and an adhesive that hardens with oxygen.

The mount 40 can be formed from a metal such as Kovar. The mount 40 includes a plate-shaped support portion 41 to be mounted on the base substrate, a seat 42 formed by raising part of an upper surface of the plate-shaped support portion 41, and a groove portion 43 provided in the support portion 41 at a portion surrounding the seat 42. The adhesive 38a is applied to an adhesion surface which is an upper surface of the seat 42 of the mount 40, and the PLC chip 33 is bonded and fixed at part of its lower surface. In the integrated optical module of the present invention, the groove portion 43 is formed around the seat 42 which is formed as part of the mount 40, so as to accommodate an adhesive 38b overflowing from the adhesion surface between the PLC chip 33 and the mount 40. While the mount 40 is made of a metal, the adhesive is made of a resin. Thus, only the adhesive swells when the humidity increases. Since the groove portion 43 is formed around the seat 42, the adhesive 38b overflowing from the adhesion surface is accommodated in the groove portion 43. Thus, the adhesive 38b does not exert a pressure pushing up the PLC chip 33 when swelling, and therefore, positional change and separation of the PLC chip 33 do not occur.

A volume V2 of the groove portion 43 is determined based on the allowable amount of adhesive. For example, by setting the volume V2 to a value larger than an amount V1 of the adhesive 38a needed by the adhesion surface between the PLC chip 33 and the seat 40, even if the adhesive is applied twice or more than twice the necessary amount V1 of the adhesive is applied, the overflowing adhesive 38b does not exert a pressure pushing up the PLC chip 33.

The groove portion 43 can be formed by use of a cutting drill. The groove portion 43 can be formed to have a width of, for example, 1 mm. Although the width of the groove portion 43 does not have to be constant, it is preferable that the groove portion 43 be formed such that four sides around the seat 42 are symmetric. The width of the groove portion 43 is preferably small because the adhesive is then permitted to enter the groove portion 43 due to capillary action. However, the groove portion 43 needs to have a certain width in order to accommodate a certain amount of overflowing adhesive. On the other hand, if the groove portion 43 is too wide and if the surface of the support portion 41 of the mount 40 has poor wettability, the adhesive may not enter the groove portion 43. For this reason, the width of the groove portion 43 is determined according to a relation between the wettability of the surface of the mount 40 and the surface tension of the adhesive. The groove portion 43 does not need to be provided along the entire periphery of the seat 42, and may be provided in only part of each of the surrounding four sides. In this case, it is preferable that each portion of the groove portion 43 is provided such that the groove portion 43 is symmetric in shape with the four sides.

The sectional shape of the seat 42 is not limited to a square as shown in Fig. 5B, but may be any shape such as a circle. However, if the section is square as shown in Fig. 5B, a large adhesive area can be obtained to achieve stable adhesion between the seat 42 and the PLC chip 33.

According to the embodiment described above, the groove portion 43 is formed around the seat 42 which is formed as part of the mount 40 so as to be able to accommodate the adhesive 38b overflowing from the adhesion surface between the PLC chip 33 and the mount 40. Thus, the overflowing adhesive 38b does not exert a pressure pushing up the PLC chip 33 when swelling, and therefore, positional change and separation of the PLC chip 33 do not occur.

### (Second Embodiment)

Figs. 6A and 6B are diagrams each showing a main portion of an integrated optical module of a second embodiment. Fig. 6A is a side sectional view showing a schematic configuration of the main portion of the integrated optical module of the second embodiment, and Fig. 6 is a top view of a mount used in the integrated optical module of the second embodiment. The integrated optical module of this embodiment has the same configuration as the integrated optical module of the first embodiment, except that part of the groove portion 43 is formed as a penetrating hole 44 penetrating the support portion 41.

In the integrated optical module of this embodiment, part of the groove portion 43 is formed as the penetrating hole 44. The penetrating hole 44 enables observation of how far the adhesive flows and what kind of adhesion state is caused by how much adhesive. In a conventional module, the state of the adhesion needs to be observed by checking the seat portion laterally through a gap between the PLC chip 33 and the support portion 41 of the mount 40 of the module. This gap portion is about several hundred µm and very small, making the observation really difficult.

The penetrating hole 44 can be formed using a cutting drill, like the groove 43. The penetrating hole 44 may be formed in part of each side of the groove formed along the four sides. Preferably, the shape of the penetrating hole 44 in each side is the same. This is because deformation can be prevented by the symmetry.

By the provision of the penetrating hole 44, even if the overflowing adhesive does not enter the groove portion 43 due to the groove portion 43 being too wide or the mount 40 having poor wettability, excessive adhesive can be removed from the outside by vacuum suction through the penetrating hole 44 from a surface of the mount 40 which is opposite from the adhesion surface.

As described, according to the configuration of this embodiment, the penetrating hole is formed in part of the groove portion 43 formed around the seat 42 which is formed as part of the mount 40 so as to be able to accommodate the adhesive 38b overflowing from the adhesion surface between the PLC chip 33 and the mount 40. Thus, the overflowing adhesive 38 does not exert a pressure pushing up the PLC chip 33 when swelling, and therefore, positional change and separation of the PLC chip 33 do not occur.

Although the support portion and the seat which constitute the mount are integrally formed in the above embodiments as an example, the seat may be bonded to the upper surface of the support portion with an adhesive.

### Reference Signs List

- 33: PLC chip
- 33a: Si substrate
- 33b: silica glass layer
- 36: optical fiber
- 37: fiber-fixing component
- 38a, 38b: adhesive
- 40: mount
- 41: support portion
- 42: seat
- 43: groove portion
- 44: penetrating hole

## Claims

1. An integrated optical module comprising:
a PLC chip (33); and
a mount (40) including a support portion (41) and a seat (42) formed by raising part of an upper surface of the support portion (41), wherein
the seat (42) is bonded and fixed to part of a lower surface of the PLC chip (33) with an adhesive (38a) which is applied to an upper surface of the seat (42), the upper surface of the seat (42) serving as an adhesion surface, and
an upper surface of the support portion (41) has wettability,
**characterized in that**
a groove (43) where the adhesive (38b) overflowing from the upper surface of the seat (42) is to stay is formed in the upper surface of the support portion (41) at a portion surrounding the seat (42), wherein
a width of the groove (43) is determined according to a relation between the wettability of the upper surface of the support portion (41) and a surface tension of the adhesive (38a), so that the adhesive (38a) is permitted to enter the groove (43).

2. The integrated optical module according to claim 1, wherein
part of the groove (43) has a penetrating hole (44) penetrating from the upper surface to a lower surface of the support portion (41).

3. The integrated optical module according to any one of claims 1 and 2, wherein
a shape of the groove (43) is symmetric around the seat (42).

## Patentansprüche

1. Integriertes optisches Modul mit:
einem PLC-Chip (33); und
einer Halterung (40), die einen Trageabschnitt (41) und einen Sitz (42) aufweist, der durch Erhöhen eines Teils einer Oberseite des Trageabschnitts (41) ausgebildet ist, wobei
der Sitz (42) mit einem Klebstoff (38a), der auf einer Oberseite des Sitzes (42) aufgebracht ist, an einem Teil einer Unterseite des PLC-Chips (33) angeklebt und befestigt ist, wobei die Oberseite des Sitzes (42) als eine Klebefläche dient, und
eine Oberseite des Trageabschnitts (41) Benetzbarkeit hat,
**dadurch gekennzeichnet, dass**
auf der Oberseite des Trageabschnitts (41) an einem Abschnitt, der den Sitz (42) umgibt, eine Nut (43) ausgebildet ist, in der der Klebstoff (38b) bleiben soll, der von der Oberseite des Sitzes (42) überläuft, wobei
eine Breite der Nut (43) entsprechend einem Zusammenhang zwischen der Benetzbarkeit der Oberseite des Trageabschnitts (41) und einer Oberflächenspannung des Klebstoffs (38a) so festgelegt ist, dass dem Klebstoff (38a) erlaubt wird, in die Nut (43) einzudringen.

2. Integriertes optisches Modul nach Anspruch 1, wobei
ein Teil der Nut (43) ein durchdringendes Loch (44) hat, das von einer Oberseite zu einer Unterseite des Trageabschnitts (41) durchdringt.

3. Integriertes optisches Modul nach einem der Ansprüche 1 und 2, wobei
eine Form der Nut (43) um den Sitz (42) herum symmetrisch ist.

## Revendications

1. Module optique intégré comprenant :
une puce PLC (33) ; et
un support (40) comprenant une partie de support (41) et un siège (42) formé en levant une partie d'une surface supérieure de la partie de support (41), dans lequel :
le siège (42) est relié et fixé à une partie d'une surface inférieure de la puce PLC (33) avec un adhésif (38a) qui est appliqué sur une surface supérieure du siège (42), la surface supérieure du siège (42) servant de surface d'adhérence, et
une surface supérieure de la partie de support (41) présente une aptitude au mouillage,
**caractérisé en ce que** :
une rainure (43) où l'adhésif (38b) débordant de la surface supérieure du siège (42) doit rester, est formée dans la surface supérieure de la partie de support (41) au niveau d'une partie entourant le siège (42), dans lequel :
une largeur de la rainure (43) est déterminée selon une relation entre l'aptitude au mouillage de la surface supérieure de la partie de support (41) et une tension de surface de l'adhésif (38a), de sorte que l'adhésif (38a) est autorisé à pénétrer dans la rainure (43).

2. Module optique intégré selon la revendication 1, dans lequel :
une partie de la rainure (43) a un trou de pénétration (44) pénétrant de la surface supérieure à une surface inférieure de la partie de support (41).

3. Module optique intégré selon l'une quelconque des revendications 1 et 2, dans lequel :
une forme de la rainure (43) est symétrique autour du siège (42).
